# EUROPÄISCHE PATENTSCHRIFT

(11) **EP 1 401 311 B1**
(45) Veröffentlichungstag und Bekanntmachung des Hinweises auf die Patenterteilung: **22.08.2007**
(21) Anmeldenummer: 02767156.9
(22) Anmeldetag: 01.07.2002
(51) Int. Cl.: A47J 27/21

(54) **KÜCHENGEFÄSS MIT EINEM HEIZBODEN**
KITCHEN VESSEL WITH A HEATING BASE
RECIPIENT DE CUISINE A FOND CHAUFFANT

(30) Priorität: 29.06.2001 DE 10131482; 17.06.2002 DE 10226939
(43) Veröffentlichungstag der Anmeldung: 31.03.2004
(73) Patentinhaber: Vorwerk & Co. Interholding GmbH, 42275 Wuppertal (DE)
(72) Erfinder: HELLRUNG, Dirk, 45239 Essen (DE); KÖCHEL, Matthias, 45549 Sprockhövel (DE); WEBER, Klaus, Martin, 42107 Wuppertal (DE); BIELZER, Raffael, 51399 Burscheid (DE)
(74) Vertreter: Müller, Enno
(86) Internationale Anmeldenummer: PCT/EP2002/007017
(87) Internationale Veröffentlichungsnummer: WO 2003/001952

(56) Entgegenhaltungen:
- WO-A-01/78457
- WO-A-98/10489
- DE-C- 19 830 181
- GB-A- 2 317 991
- US-A- 5 842 346
- US-A- 5 971 810

## Beschreibung

Die Erfindung betrifft ein Küchengefäß gemäß dem Oberbegriff von Anspruch 1 mit einem Heizboden, der elektrisch beheizt wird, wobei der Heizboden aus einem Widerstand-Heizelement besteht, wobei dem Heizboden weiter ein Aufsetzadapter zugeordnet ist, über welchen die elektrische Kontaktierung des Heizbodens über an dem Heizboden unterseitig angeordnete Steckvorsprünge erfolgt.

Küchengefäße der in Rede stehenden Art sind bekannt, so bspw. in Form von beheizbaren Gefäßen für Küchenmaschinen oder auch in Form von Wasserkochem. Hier ist weiter bekannt, den Boden des Küchengefäßes mit einem Widerstand-Heizelement in Art einer Dickschichtheizung zu versehen. Unabhängig von der Art und Ausgestaltung der bekannten Küchengefäße sind diese einem gesonderten Aufsetzadapter, über welchen die Stromversorgung erfolgt, zuordbar. Bei einer Anordnung eines Küchengefäßes der in Rede stehenden Art in einer Küchenmaschine formt ein Gehäuseteil der Küchenmaschine diesen Aufsetzadapter aus. Letzterer verfügt in der Regel über Aufnahmebuchsen für die bodenseitige Steckvorsprünge des Küchengefäßes, um hierüber die elektrische Kontaktierung des Heizbodens zu ermöglichen. Nachteilig an den bekannten Lösungen ist, dass diese Küchengefäße nicht zur Reinigung in einer Spülmaschine geeignet sind. Die Dokumente US 5 971 810 A und GB 2 317 991 A beschreiben Küchengefäße in der Form von Wasserkochern.

Im Hinblick auf den zuvor beschriebenen Stand der Technik wird eine technische Problematik der Erfindung darin gesehen, ein Küchengefäß der in Rede stehenden Art derart in vorteilhafter Weise weiterzubilden, dass dieses geeignet ist zur Reinigung in einer Spülmaschine.

Diese Problematik ist durch den Gegenstand des Anspruchs 1 gelöst, wobei darauf abgestellt ist, dass ein Steckvorsprung außerhalb des Heizbodens einen geometrisch wirksamen Isolationsfuß aufweist. Bekanntlich weisen Gegenstände, welche kurz nach Ablauf eine Spülmaschinendurchganges entnommen werden, häufig eine Restfeuchte (Kondensat) auf, so dass bei einem Küchengefäß der in Rede stehenden Art bei einer Kontaktierung mit dem Aufsetzadapter unerwünschte Kriechströme vorliegen können. Durch die erfindungsgemäße Ausgestaltung, bei welcher die, mit dem Aufsetzadapter kontaktierenden Steckvorsprünge mit einem Isolatorfuß versehen sind, werden die Kriechstrecken geometrisch verlängert. Das erfindungsgemäße Küchengefäß ist daher auch in leicht feuchtem Zustand kurz nach einem Spülmaschinendurchgang in den Aufsetzadapter bzw. den Aufsetzbereich eines Küchenmaschinen-Gehäuses einsetzbar. Um die Kriechstrecken weiter zu verlängern, ist bevorzugt vorgesehen, dass der Isolatorfuß eine Umfangsrillung aufweist. Bspw. kann hierbei vorgesehen sein, dass die Umfangsrillung durch eine gegenüber einem oberen und unteren Abschnitt des Isolatorfußes erfolgte Einschnürung gegeben ist. Denkbar ist auch eine Anordnung mehrerer, in Erstrekkungsrichtung des Steckvorsprunges zueinander beabstandeter Einschnürungen, so dass ein von der Außenkontur her betrachteter faltenbalgähnlicher Isolatorfuß gebildet ist, wobei weiter der Isolatorfuß einen kreisscheibenförmigen Grundriss aufweist. Alternativ kann jedoch auch vorgesehen sein, dass die Umfangsrillung durch eine senkrecht zur Ebene des Heizbodens sich erstreckende, hinterschneidungsfreie Strukturierung gegeben ist. Hierbei ist entgegen dem zuvor beschriebenen Beispiel, bei welchem die Kriechstrecke etwa entlang der Längserstreckung der Steckvorsprünge verläuft, eine im Wesentlichen senkrecht zur Steckvorsprung-Erstreckung gerichtete Kriechstrecke vorgesehen, welche durch bspw. konzentrische, rinnenförmige Ausnehmungen in dem Isolatorfuß verlängert ist. Des Weiteren erweist es sich als besonders vorteilhaft, wenn der Isolatorfuß aus einem flüssigkeits- und/ oder feststoffabweisenden Material besteht. So besteht bevorzugt der Isolatorfluß aus Silikon. Alternativ kann auch als Isolatormaterial PTFE gewählt sein. Eine weitere Sicherheitsmaßnahme gemäß Anspruch 1 sieht vor, eventuelle Flüssigkeitsfilme zu unterbrechen. Hierzu sind in dem Aufsetzadapter Abstreifelemente vorgesehen, welche mit den Steckvorsprüngen zusammenwirken. Bei einem Aufsetzen des Küchengefäßes auf den Adapter gleiten die Steckvorsprünge an den, bspw. als Nutringe ausgebildeten Abstreifelementen, den Flüssigkeitsfilm unterbrechend, vorbei. Wie erwähnt, erfolgt die Beheizung des Küchengefäßes bodenseitig über ein Widerstand-Heizelement, bei welchem dünne Heizungsbahnen, die bspw. auf eine emaillierte Edelstahlplatte gedruckt sind, bei einem Aufsetzen des Küchengefäßes auf den Aufsetzadapter elektrisch kontaktiert werden. Ein Schutzlack, der über die metallischen Bahnen aufgetragen wird, dient zur Passivierung. Er stellt jedoch keinen Schutz gegen äußere, mechanische und elektrische Einflüsse dar. Aus diesem Grund ist der Bereich unter dieser sogenannten Dickschichtheizung mit einem dazu beabstandeten Zweitboden überdeckt. Diesbezüglich wird vorgeschlagen, dass die Steckvorsprünge gegenüber dem Heizboden an dem dazu beabstandeten Zweitboden gehaltert sind und dass der zwischen dem Heizboden und dem Zweitboden geschaffene Hohlraum mit einem Füllmedium ausgefüllt ist. Zufolge dieser erfindungsgemäßen Ausgestaltung ist der Heizboden wasserdicht geschützt. Die an dem Zweitboden gehalterten Steckvorsprünge durchsetzen den gefüllten Hohlraum und kontaktieren einerends den Heizboden. Duch das Ausfüllen des Hohlraumes mit einem Füllmedium besteht für eventuell eindringende Flüssigkeit kein Raum mehr zur Verfügung. Eine weitere Sicherungsmaßnahme besteht darin, dass den Leiterelementen der Steckvorsprung jedenfalls innenseitig des Hohlraumes ein zwischen diesen sich erstrekkendes Kreichstrommaterial zugeordnet ist. Zufolge dessen ist bei eventuell eintretender Flüssigkeit in den Hohlraum die Kriechstrecke zwischen den spannungsführenden Kontakten vorgegeben. So kann bspw. ein Kriechstrommaterial ein zwischen den spannungsführenden Leiterelementen der Steckvorsprünge angeordneter Docht sein. Alternativ besteht auch die Möglichkeit, dass das Kriechstrommaterial ein hinsichtlich Kapillarwirkung strukturiertes Materialteil ist. Weiter denkbar ist auch ein hydroskopisches Material, wie bspw. ein Salzdepot als Kriechstrommaterial. In einer Weiterbildung des Erfindungsgegenstandes, bei welchem ein mit dem Heizboden zusammenwirkender Temperaturfühler gemäß Anspruch 1 vorgesehen ist, wird vorgeschlagen, dass der Temperaturfühler in einem Bereich einer kürzeren Verbindungsstrecke zwischen den beiden stromführenden Leiterelementen angeordnet ist. Diesbezüglich wird ein Temperaturfühler in Form eines NTC-Elementes vorgesehen. Durch die Anordnung dieses Elementes zwischen den beiden stromführenden Leiterelementen erfolgt im Falle eines Flüssigkeitseinbruches in den Hohlraum zwischen Heizboden und Zweitboden ein Kurzschluss über den Temperaturfühler, welcher detektiert werden kann und zum Abschalten des Gerätes führt. Darüber hinaus werden auch die stromführenden Leiterelemente sehr nahe aneinander geführt, so dass im Falle des Flüssigkeitseinbruches ein gezielter Kurzschluss entsteht, der zum Auslösen der Haushaltssicherung führt. Eine weitere Sicherungsmaßnahme ist dadurch erreicht, dass innerhalb des Hohlraumes ein auf einen Kontakt des elektrischen Leiterelementes einwirkendes Quellmaterial angeordnet ist. Diesbezüglich wird weiter vorgeschlagen, dass das Leiterelement unter Federvorspannung kontaktierend an dem Heizboden anliegt und dass das Quellmaterial bei Aufquellen die Federvorspannung überwindend die Kontaktierung unterbricht. So kann bspw. als Quellmaterial ein schwammähnliches Material vorgesehen sein, welches bei Flüssigkeitsbeaufschlagung aufquellt und ein Abheben der abgefederten Leiterelemente bewirkt. Dieses Quellmaterial kann zudem auch zugleich als das erwähnte Kriechstommaterial zur Richtungsvorgabe der Kriechstrecke dienen. Auch erweist es sich noch von Vorteil, wenn die stromführenden Leiterelemente bzw. die Steckvorsprünge und der Temperaturfühler in einem, im Bereich des Zweitbodens an das Küchengefäß verrasteten und gegenüber dem Zweitboden abgedichteten Kontaktmodul aufgenommen sind. Die Leiterelemente sind hierbei in Form von Messer- und Rundkontakten ausgebildet und mit einem Kunststoff (z. B. PBT, PA oder SPS) umspritzt. Auch durch diese Maßnahme ist der Hohlraum zwischen Heizboden und Zweitboden abgedichtet. In einer Weiterbildung des Erfindungsgegenstandes ist vorgesehen, dass der Temperaturfühler Unterseitig des Heizbodens und demnach innerhalb des Hohlraumes zwischen Heizboden und Zweitboden angebracht ist. Bevorzugt wird diesbezüglich weiter, dass der Temperaturfühler mittels eines, einen größeren Bereich als den Temperaturfühler abdeckenden, wärmeleitenden Zwischenelements den Heizboden kontaktiert. Zufolge dieser Ausgestaltung wird zur Temperaturmessung eine vergrößerte Heizbodenfläche abgefragt, woraus ein Zwischenwert ermittelt werden kann. So kann ein wärmeleitendes Fett, bspw. in Form eines in Folie eingeschweißten Paraffin-, Wasser- oder Öl-Kissen über den Temperaturfühler angeordnet sein. Denkbar ist auch eine dünne, gut wärmeleitende Kunststoffscheibe als Zwischenelement. Um eine sichere, dauerhafte Kontaktierung des Temperaturfühlers zu gewährleisten, ist weiter vorgesehen, dass der Temperaturfühler mittels eines, eine Vorspannung ausübenden elastischen Elements in seine Kontaktstellung gedrückt ist. Dieses Ausdruckselement dient hierbei als Federelement, wobei bevorzugt wird, dass das elastische Element aus einem wärmebeständigen Material besteht, so bspw. aus Silikonschaum. Ein weiterer Vorteil ergibt sich daraus, dass das elastische Element mittels Selbstklebeschichten mit dem Kontaktmodul und/ oder mit dem Temperaturfühler verbunden ist. Bevorzugt wird hierbei das elastische Element mittels der Selbstklebeschicht zunächst mit dem Kontaktmodul, bevorzugt im Bereich einer kürzeren Verbindungsstrecke zwischen den beiden stromführenden Leiterelementen verbunden, wonach der Temperaturfühler auf der gegenüberliegenden Selbstklebeschicht aufgebracht wird. Das elastische Element weist hierbei weiter bevorzugt einen gegenüber dem Grundriss des Temperaturfühlers vergrößerten Grundriss auf, womit auch die zugewandte Selbstklebefläche entsprechend flächenmäßig größer gewählt ist. Diese überstehende Klebefläche dient zum Anhaften des über dem Temperaturbegrenzer gespannten, wärmeleitenden Zwischenelements.

Weiterhin ist vorgesehen, dass mittels Kontaktierung der Heizungsbahnen in der elektrischen Schaltung der Heizungsbahnen ein im Auslösefall zur Unterbrechung eines Stromkreislaufes führender Temperaturbegrenzer eingebaut ist. Übersteigt die Temperatur der Heizscheibe einen kritischen Wert, so unterbricht der Temperaturbegrenzer den Stromkreislauf der Heizungsbahnen. So kann bspw. der Temperaturbegrenzer ein Bi-Metallschalter sein. Auch dieser Temperaturbegrenzer ist bevorzugt innerhalb des Hohlraumes zwischen dem Heizboden und dem Zweitboden angeordnet, wobei der Temperaturbegrenzer durch diesen Zweitboden abgestützt ist. Um auch hier eine kontinuierliche und dauerhafte Kontaktierung des Temperaturbegrenzers mit den Heizungsbahnen zu gewährleisten, ist vorgesehen, dass der Temperaturbegrenzer mittels eines, eine Vorspannung ausübenden elastischen Elements in seine Kontaktstellung gedrückt ist. Auch dieses Andruckelement dient als Federelement, welches zwischen den Termperaturbegrenzer und dem Zweitboden angeordnet ist. Das elastische Element besteht aus einem wärmebeständigen Material, wie bsw. Silikonschaum. Schließlich erweist es sich auch hier als vorteilhaft, dass das elastische Element mittels Selbstklebeschichten mit dem Zweitboden und/oder mit dem Temperaturbegrenzer verbunden ist.

Nachstehend ist die Erfindung anhand der beigefügten Zeichnung, welche lediglich mehrere Ausführungsbeispiele darstellt, näher erläutert. Es zeigt:
- Fig.1: eine Ansicht gegen eine Küchenmaschine mit einem erfindungsgemäßen Küchengefäß;

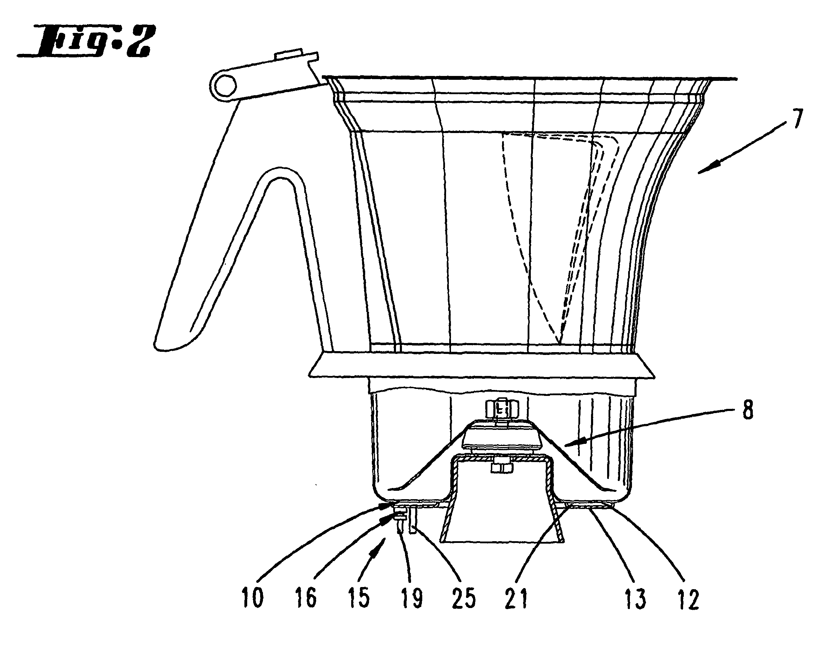

- Fig. 2: das Küchengefäß in einer partiell geschnittenen Einzeldarstellung;
- Fig. 3: eine Ausschnittdarstellung gegen den, der elektrischen Kontaktierung dienenden Bodenbereich des Küchengefäßes;
- Fig. 4: eine perspektivische Unteransicht des Kontaktierungsbereiches des Küchengefäßes;
- Fig. 5: den Schnitt gemäß der Linie V-V in Fig. 4;

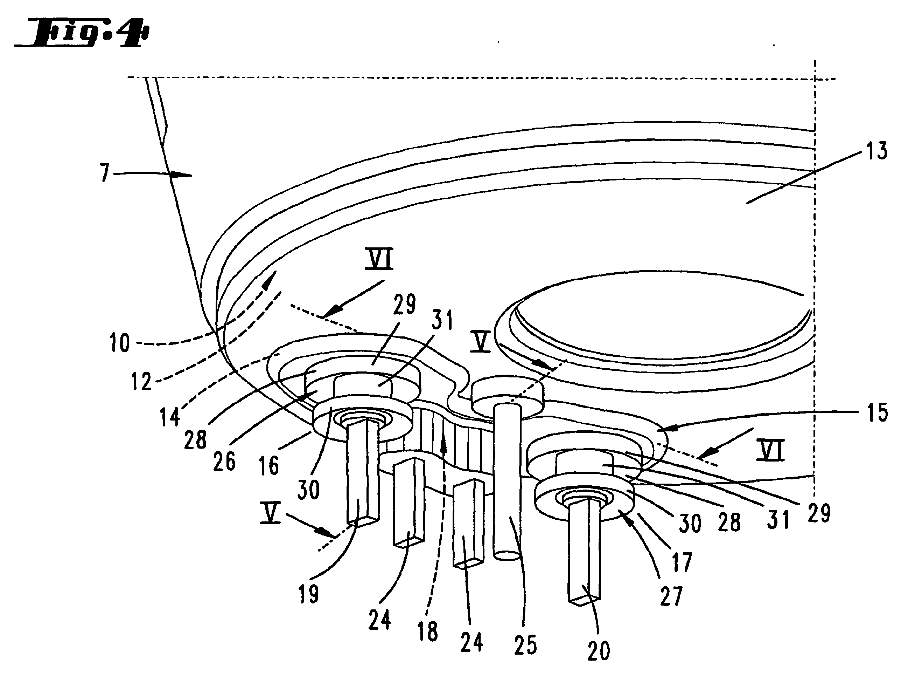

- Fig. 6: den Schnitt etwa gemäß der Linie VI-VI in Fig. 4, eine alternative Ausgestaltung betreffend;
- Fig. 7: eine Herausvergrößerung des Bereiches VII-VII in Fig. 6, eine weitere alternative Ausführungsform betreffend;
- Fig. 8: eine der Fig. 7 entsprechende Darstellung, jedoch die Unterbrechung einer Kontaktierung betreffend;
- Fig. 9: eine Detail-Schnittdarstellung, den Zusammenwirkungsbereich eines Steckvorsprunges des Küchengefäßes mit einer Steckaufnahme eines Aufsetzadapters für das Küchengefäß betreffend;
- Fig. 10: eine perspektivische Schnittdarstellung, den Bereich eines in einem Hohlraum angeordneten Temperaturbegrenzers betreffend;
- Fig. 11: eine perspektivische Unteransicht gegen eine Heizscheibe des Küchengefäßes mit Blick auf den Temperaturbegrenzer, unter Fortlassung des Gefäßbodens;

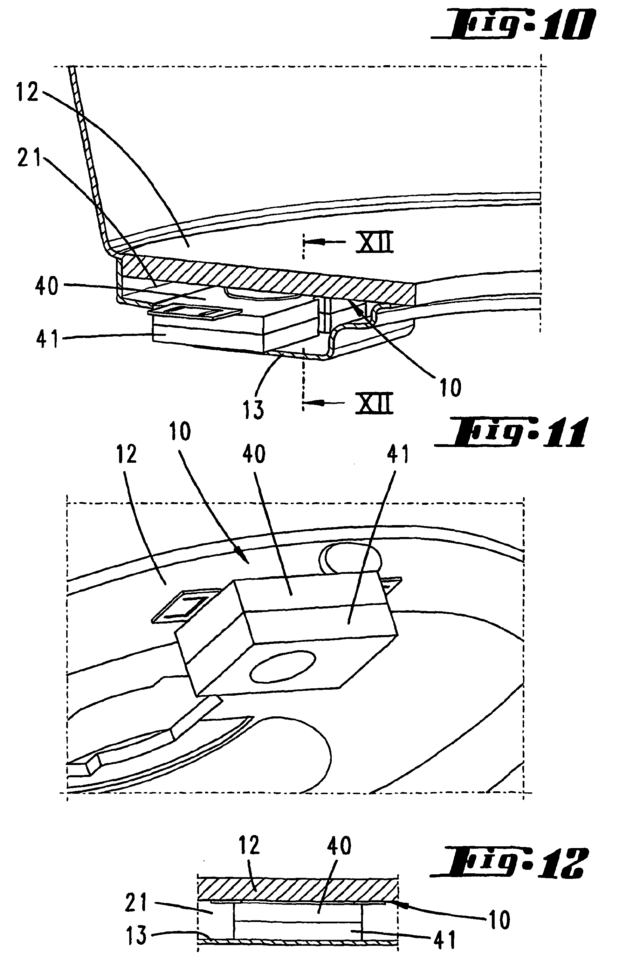

- Fig. 12: den Schnitt gemäß der Linie XII-XII in Fig. 10;
- Fig. 13: eine perspektivische Darstellung des, den Heizboden kontaktierenden Bereichs eines in den Gefäßboden eingesetzten Kontaktmoduls betreffend;
- Fig. 14: eine Querschnittsdarstellung zu Fig. 13.

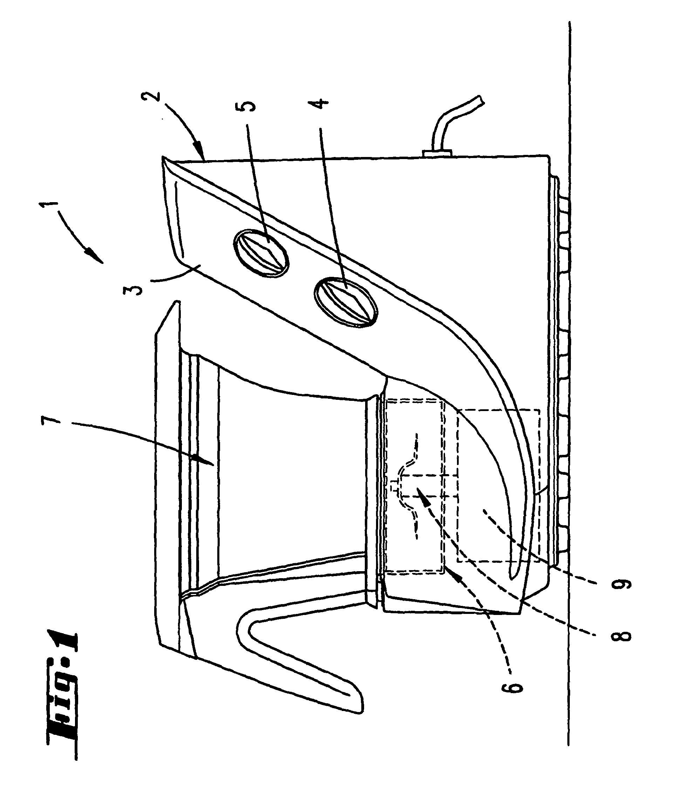

Dargestellt und beschrieben ist zunächst mit zu Fig.1 eine Küchenmaschine mit einem Gehäuse 2, welch letzteres ein Bedienfeld 3 aufweist. Dieses Bedienfeld 3 trägt einen Temperaturwähler 4 sowie einen Drehzahlsteller 5.

Des Weiteren weist das Gehäuse 2 einen, einen Aufsetzadapter 6 ausbildenden Aufnahmebereich für eine Küchengefäß 7 in Form eines beheizbaren Rührgefäß auf.

In dem dargestellten Ausführungsbeispiel weist das Küchengefäß 7 ein Rührwerk 8 auf, welches über eine nicht näher dargestellte Kupplung bei in dem Aufsetzadapter 6 eingesetztem Küchengefäß 7 mit einem, über den Drehzahlsteller 5 regelbaren Elektromotor 9 in Verbindung steht.

Zudem ist das Küchengefäß 7 bodenseitig mit einem Widerstand-Heizelement 10 in Form einer Dickschichtheizung versehen. Demzufolge erfolgt eine Beheizung des Küchengefäßes 7 von der Unterseite her über dünne Heizungsbahnen, die auf eine emaillierte, den Gefäßboden 11 ausbildenden Edelstahlplatte gedruckt sind. Ein Schutzlack, der über die metallischen Bahnen aufgetragen wird, dient zur Passivierung. Bezüglich der Ausbildung des Widerstand-Heizelementes 10 wird auf die nicht vorveröffentlichte deutsche Patentanmeldung 100 19 126.6 verwiesen.

An einem zu dem Heizboden 12 beabstandeten Zweitboden 13 ist im Bereich einer entsprechend ausgebildeten Zweitboden-Öffnung 14 ein Kontaktmodul 15 rastgehaltert, welch letzteres zwei, der Stromversorgung dienende Steckvorsprünge 16,17, sowie einen Temperaturfühler 18 trägt, wobei die stromführenden Steckvorsprünge 16,17 mit Leiterelementen 19, 20, den Hohlraum 21 zwischen Heizboden 12 und Zweitboden 13 durchsetzend, das Heizelement 10 bzw. die aufgedruckten Leiterbahnen desselben elektrisch kontaktieren.

Die Leiterelemente 19, 20 bestehen aus Messerkontakten, welche zur Ausbildung des Kontaktmoduls 15 mit einem Kunststoff, wie bspw. PBT, PA oder SPS umspritzt werden. Um den Hohlraum 21 gegen Eindringen von Flüssigkeit zu schützen und somit das Küchengefäß 7 auch spülmaschinenfest auszubilden, wird das eingesetzte Kontaktmodul 15 gegen den Zweitboden 13 abgedichtet.

Zur Kontaktierung des Heizelementes 10 sind die Leiterelemente 19, 20 endseitig mit Federkontakten 22, 23 versehen, so dass eine Kontaktierung unter Federvorspannung erfolgt.

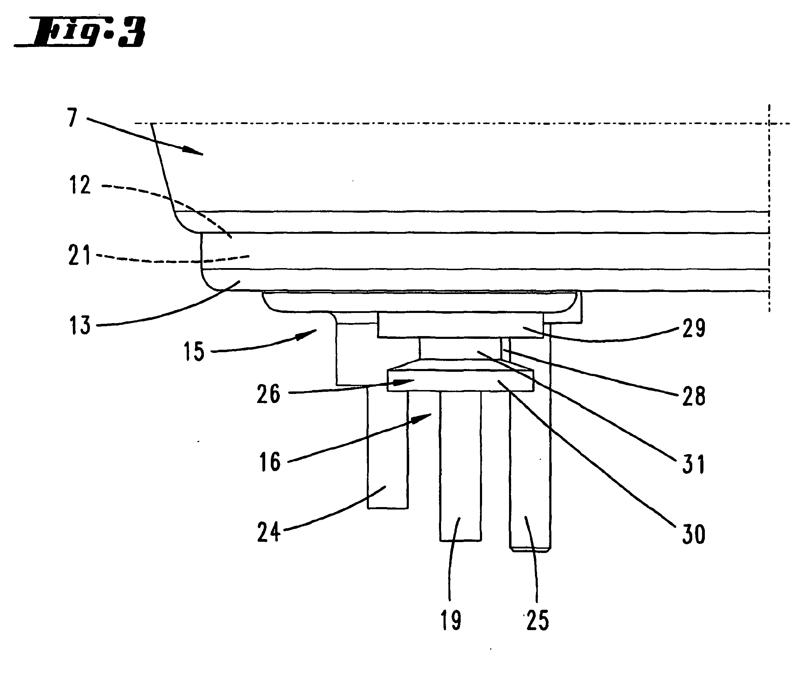

Wie insbesondere aus der Darstellung in Fig. 4 zu erkennen, sind die Steckvorsprünge 16,17 bzw. deren Leiterelemente 19, 20 in relativer Nähe zueinander angeordnet, wobei der Temperaturfühler 18 in Form eines NTC's in einem Bereich einer kürzeren Verbindungsstrecke zwischen den beiden stromführenden Leiterelementen 19, 20 angeordnet ist. Diese Anordnung ist weiter so gewählt, dass ein erstes Leiterelement 19, die Anschlussfahnen 24 des Temperaturfühlers 18 und der zweite Steckvorsprung 17 etwa auf einem konzentrisch zur Gefäßachse verlaufenden Kreislinienabschnitt positioniert sind.

Zudem ist an dem Zweitboden 13 unterseitig ein weiterer Rundkontakt 25 direkt, leitungsführend, mit dem Zweitboden 13 befestigt. Dieser Rundkontakt 25 dient zum Schutzleiteranschluss.

Die über die Unterseite des Zweitbodens 13 hinauskragenden Abschnitte der Leiterelemente 19, 20 der Steckvorsprünge 16,17, sowie die Anschlussfahnen 24 des Temperaturfühlers18 als auch der Rundkontakt 25 greifen bei Einsetzen des Küchengefäßes 7 in den gehäuseseitigen Aufsetzadapter 6 in entsprechend positionierte, nicht näher dargestellte Steckaufnahmen ein, wonach die elektrische Verbindung zum Gerät hergestellt ist.

Damit es beim Kontaktieren eines Küchengefäßes 7 welches noch im feuchten Zustand aus einer Spülmaschine oder dergleichen entnommen und auf den Aufsetzadapter 6 aufgesetzt wird, nicht zu unerwünschten Kriechströmen kommt, sind die stromführenden Steckvorsprünge 16,17 außerhalb des Heizbodens 12, konkret unterseitig des Zweitbodens 13, mit geometrisch wirksamen Isolatorfüßen 26, 27 versehen. Diese bestehen aus einem flüssigkeits- und/oder feststoffabweisenden Material, wie bspw. Silikon oder PTFE und weisen einen im Wesentlichen kreisscheibenförmigen Grundriss auf.

Um mittels dieser Isolatorfüße 26, 27 die Kriechstrecken geometrisch zu verlängern, sind die Isolatorfüße 26, 27 jeweils mit, wie dargestellt, einer Umfangsrillung 28 versehen, welch letztere durch einen gegenüber einem oberen Abschnitt 29 und einem unteren Abschnitt 30 des jeweiligen Isolatorfußes 26, 27 erfolgte Einschnürung 31 gegeben ist.

Die in Axialerstreckung der Isolatorfüße 26, 27 gemessene Höhe derselben entspricht etwa einem Drittel bis der Hälfte der über den Zweitboden 13 nach unten frei auskragenden Länge der jeweiligen Leiterelemente 19, 20.

Eine weitere Sicherheitsmaßnahme besteht darin, in den Steckaufnahmen 32 des Aufsetzadapters 6 mit den Steckvorsprüngen 16, 17 bzw. deren Leiterelementen 19, 20 zusammenwirkende Abstreifelemente 33, bspw. in Form von Nutringen, vorzusehen. Zufolge dieser Ausgestaltung wird bei einem Vorbeigleiten der Leiterelemente 19, 20 an den Abstreifelementen 33 ein eventuell vorhandener Flüssigkeitsfilm unterbrochen (vergl. Fig. 9).

Um den zwischen dem Heizboden 12 und dem Zweitboden 13 gebildeten Hohlraum 21 und somit die auf den Heizboden 12 aufgebrachten metallischen Bahnen vor eindringender Flüssigkeit zu schützen, ist erfindungsgemäß der Hohlraum 21 mit einem Füllmedium 34 ausgefüllt, so dass für eventuell eindringende Flüssigkeit kein Raum zur Verfügung steht (vergl. Fig. 5).

Durch die in relativer Nähe zueinander angeordneten, stromführenden Steckvorsprünge 16,17 ist darüber hinaus im Falle eines Flüssigkeitseinbruches in den Hohlraum 21 ein gezielter Kurzschluss erreichbar, der zum Auslösen der Haushaltssicherung führt.

Des Weiteren ist durch die Anordnung des Temperaturfühlers 18 zwischen den beiden Steckvorsprüngen 16, 17 ein gezielter Kurzschluss im Falle eines Flüssigkeitseinbruches in den Hohlraum 21 über diesen Temperaturfühler 18 erreichbar, der detektiert werden kann und zum Abschalten der Küchenmaschine 1 führt.

Eine weitere Sicherungsmaßnahme ist beispielhaft in Fig. 7 dargestellt. Hier ist zur Vorgabe der Kriechstrecke bei in den Hohlraum 21 eindringender Flüssigkeit die Anordnung eines sich zwischen den, den Hohlraum 21 zur Kontaktierung des Heizbodens 12 durchsetzenden Leiterelementen 19, 20 erstreckendes Kriechstrommaterial 35 vorgesehen. Hierbei kann es sich, wie schematisch dargestellt, um ein hinsichtlich Kapillarwirkung strukturiertes Materialteil handeln, welches bei Flüssigkeitsbeaufschlagung die Kurzschlussstrecke vorgibt. Alternativ kann das Kriechstrommaterial auch ein Docht oder auch ein hydroskopisches Material, wie bspw. ein Salzdepot, sein.

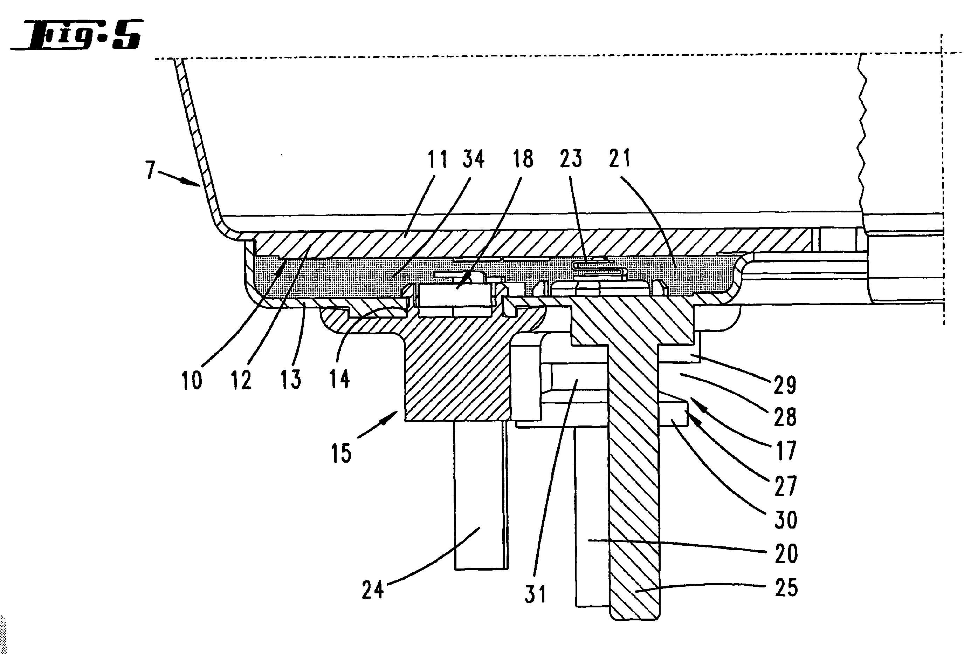

Wie aus den Darstellungen in den Fig. 7 und 8 zu erkennen, kann eine weitere Sicherheitsmaßnahme darin bestehen, innerhalb des Hohlraumes 21 ein auf den jeweiligen Kontakt - Federkontakt 22, 23 - des elektrischen Leiterelementes 19, 20 einwirkendes Quellmaterial 36 anzuordnen. Letzteres ist bevorzugt unterseitig des Heizbodens 12 im unmittelbaren Kontaktierungsbereich der Federkontakte 22, 23 positioniert derart, dass in üblicher Betriebsstellung eine Kontaktierung der Federkontakte 22, 23 mit den Leiterbahnen des Heizelementes 10 erreicht ist. Tritt hingegen Flüssigkeit in den Hohlraum 21 ein und werden aufgrund dessen die Quellmaterialien 36 mit Feuchte beaufschlagt, so quellen diese auf, was ein Anheben der Federkontakte 22, 23 über Überwindung der Federvorspannung bewirkt. Der elektrische Kontakt zu dem Heizelement ist hiernach unterbrochen.

Dieses Quellmaterial kann darüber hinaus auch zugleich die beschriebene Funktion als Kriechstrommaterial wahrnehmen, wobei eine Feuchtebeaufschlagung des Quellmaterials das Abheben der Federkontakte und einen gezielten, ggf. zu detektierenden Kurzschluss über die Federkontakte bzw. über die Leiterelemente bewirkt.

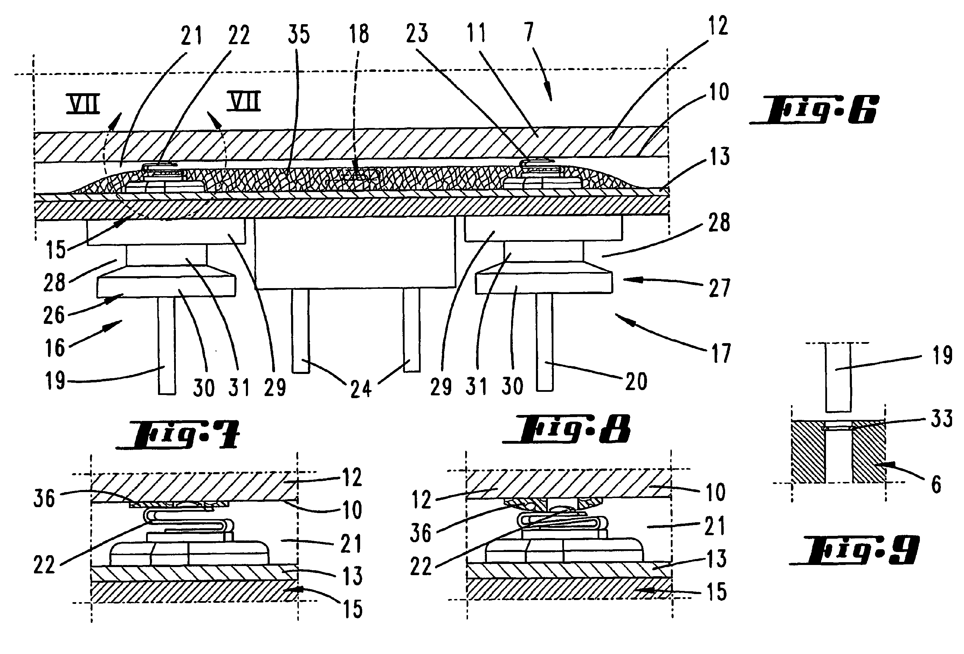

Wie aus der Darstellung in Fig. 10 zu erkennen, ist zum Abschalten des Heizelementes 10 unterseitig des Heizbodens 12 ein Temperaturbegrenzer 40 vorgesehen, welcher bspw. ein Bi-Metallschalter ist. Dieser ist in dem Hohlraum zwischen den Heizboden 12 und dem Zweitboden 13 angeordnet und stützt sich über ein elastisches Element 41 aus Silikonschaum auf dem Zweitboden 13 ab.

Das elastische Element 41 dient der Vorspannung des Temperaturbegrenzers 40 in die Kontaktstellung zu den unterseitig des Heizbodens 12 angeordneten Heizungsbahnen, wobei im Auslösefall, d. h. bei Überschreiten einer kritischen Temperatur, der Stromkreislauf unterbrochen wird.

In vorteilhafter Weise ist das elastische Element 41 mittels Selbstklebeschichten sowohl mit dem Zweitboden 13 als auch mit dem Temperaturbegrenzer 40 verbunden, wobei, wie insbesondere aus der Darstellung in Fig. 11 zu erkennen, der Grundriss des elastischen Elementes 41 dem des Temperaturbegrenzers 40 angepasst ist.

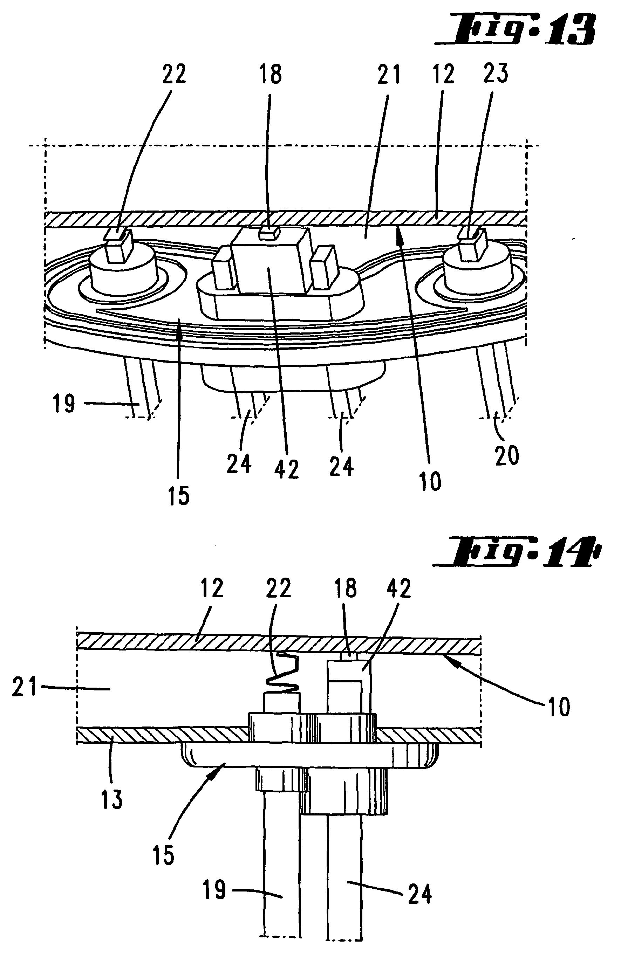

Auch der bereits erwähnte Temperaturfühler 18 ist gemäß den Darstellungen in den Fig. 13 und 14 in Richtung auf seine Kontaktstellung zu dem Heizboden 12 vorgespannt. Auch hier dient ein elastisches Element 42 als Federelement, wobei dieses elastische Element 42 zwischen dem Temperaturfühler 18 und dem Kontaktmodul 15 angeordnet ist. Erfindungsgemäß besteht dieses elastische Element 42 aus einem wärmebeständigen Material, wie bspw. Silikonschaum.

Das im Grundriss im Vergleich zum Temperaturfühler-Grundriss mehrfach größere elastische Element 42 wird mittels einer Selbstklebeschicht auf dem Kontaktmodul 15 befestigt. Die dem Kontaktmodul 15 gegenüberliegende Fläche des elastischen Elementes 42 ist gleichfalls mit einer Selbstklebeschicht versehen, auf welcher der Temperaturfühler 18 aufgebracht ist. Über dem Temperaturfühler 18 ist des Weiteren - jedoch nicht dargestellt - ein wärmeleitendes Zwischenelement aufgelegt, welches mit der selbstklebenden Oberfläche des elastischen Elementes 42 eine haltbare Verbindung ergibt. Mittels dieses Zwischenelementes deckt der Temperaturfühler 18 einen vergrößerten Bereich des Heizbodens 12 ab. Der Temperaturfüher 18 ist selbstverständlich - jedoch nicht dargestellt - über Anschlussdrähte mit den Anschlussfahnen 24 elektrisch leitend verbunden.

Durch die Anordnung der elastischen Elemente 41 und 42 sind der Temperaturbegrenzer 40 und auch der Temperaturfühler 18 kontinuierlich und dauerhaft an das Dickschichtheizelement angedrückt.

Temperaturbegrenzer 40 und Temperaturfühler 18 liegen bevorzugt diametral gegenüber, um auch in Schräglage des Küchengefäßes 7 sicher eine Übertemperatur erkennen zu können.

Die vorbeschriebenen Sicherheitsmaßnahmen sind in den Kombinationen gemäß Anspruch 1 wesentlich. Zufolge dieser Ausgestaltung ist ein spülmaschinenfestes Küchengefäß 7 mit einer schnurlosen elektrischen Kontaktierung gegeben, wobei das Küchengefäß 7 einen wasserdicht abgeschlossenen Hohlraum und Sicherheitsmaßnahmen bei ungewolltem Eindringen von Flüssigkeiten aufweist. Das Küchengefäß ist auch im feuchten Zustand - bspw. bei einer Anwendung kurz nach einem Spülmaschinendurchgang - sicher zu kontaktieren.

Gegenstand der Erfindung ist auch ein Küchengefäß gemäß Anspruch 1, bei welchem die Umfangsrillung 28 des Isolatorfußes 26, 27 durch einen gegenüber einem oberen 29 und unteren Abschnitt 30 erfolgte Einschnürung 31 gegeben ist.

Gegenstand der Erfindung ist auch ein Küchengefäß gemäß Anspruch 1, bei welchem die Umfangsrillung 28 durch eine senkrecht zur Ebene des Heizbodens 12 sich erstreckende, hinterschneidungsfreie Strukturierung gegeben ist.

Gegenstand der Erfindung ist auch ein Küchengefäß gemäß Anspruch 1, bei welchem das Leiterelement 19, 20 unter Federvorspannung kontaktierend an dem Heizboden anliegt bei dem das Quellmaterial 36 bei Aufquellen die Federvorspannung überwindend die Kontaktierung unterbricht.

Gegenstand der Erfindung ist auch ein Küchengefäß gemäß Anspruch 1, bei welchem der Temperaturfühler 18 unterseitig des Heizbodens 12 angebracht ist.

Gegenstand der Erfindung ist auch ein Küchengefäß gemäß Anspruch 1, bei welchem der Temperaturfühler 18 mittels eines, einen größeren Bereich als den Temperaturfühler 18 abdeckenden, wärmeleitenden Zwischenelementes den Heizboden 12 kontaktiert.

Gegenstand der Erfindung ist auch ein Küchengefäß gemäß Anspruch 1, bei welchem der Temperaturfühler 18 mittels eines, eine Vorspannung ausübenden elastischen Elementes 42 in seine Kontaktstellung gedrückt ist.

Gegenstand der Erfindung ist auch ein Küchengefäß gemäß Anspruch 1, bei welchem das elastische Element 42 aus einem wärmebeständigen Material besteht.

Gegenstand der Erfindung ist auch ein Küchengefäß gemäß Anspruch 1, bei welchem das elastische Element 42 mittels Selbstklebeschichten mit dem Kontaktmodul 15 und/ oder mit dem Temperaturfühler 18 verbunden ist.

Gegenstand der Erfindung ist auch ein Küchengefäß gemäß Anspruch 1, bei welchem mittels Kontaktierung der Heizungsbahnen in der elektrischen Schaltung der Heizungsbahnen ein im Auslösefall zur Unterbrechung eines Stromkreislaufes führender Temperaturbegrenzer 40 eingebaut ist.

Gegenstand der Erfindung ist auch ein Küchengefäß gemäß Anspruch 1, bei welchem der Temperaturbegrenzer 40 ein Bi-Metallschalter ist.

Gegenstand der Erfindung ist auch ein Küchengefäß gemäß Anspruch 1, bei welchem der Temperaturbegrenzer 40 durch den Zweitboden 13 abgestützt ist.

Gegenstand der Erfindung ist auch ein Küchengefäß gemäß Anspruch 1, bei welchem der Temperaturbegrenzer 40 mittels eines, eine Vorspannung ausübenden elastischen Elementes 41 in seine Kontaktstellung gedrückt ist.

Gegenstand der Erfindung ist auch ein Küchengefäß gemäß Anspruch 1, bei welchem das elastische Element 41 aus einem wärmebeständigen Material besteht.

Gegenstand der Erfindung ist auch ein Küchengefäß gemäß Anspruch 1, bei welchem das elastische Element 41 mittels Selbstklebeschichten mit dem Zweitboden 13 und/ oder mit dem Temperaturbegrenzer 40 verbunden ist.

## Patentansprüche

1. Küchengefäß (7) mit einem Heizboden (12), der elektrisch beheizt wird, wobei der Heizboden (12) aus einem Widerstand-Heizelement (10) besteht, wobei weiter der Heizboden (12) zur Schaffung eines Hohlraumes (21) unterseitig einen Zweitboden (13) aufweist, welchem Heizboden (12) weiter ein Aufsetzadapter (6) zugeordnet ist, über welchen die elektrische Kontaktierung des Heizbodens (12) über an dem Heizboden (12) unterseitig angeordnete Steckvorsprünge (16,17) mit Leiterelementen (19, 20) erfolgt, wobei weiter die Steckvorsprünge (16, 17) je einen geometrisch wirksamen Isolatorfuß (26, 27) aufweisen, **dadurch gekennzeichnet, dass** ein Steckvorsprung (16,17) unterseitig des Zweitbodens (13) einen Isolatorfuß (26, 27) aufweist, dass eine in Axialerstreckung gemessene Höhe des Isolatorfußes (26, 27) einem Drittel bis der Hälfte der frei auskragenden Länge des Leiterelementes (19,20) entspricht, dass das Leiterelement (19,20) über einen Federkontakt (22, 23) den Heizboden (12) unterseitig elektrisch kontaktiert, dass weiter ein Temperaturfühler (18) vorgesehen ist, der in Richtung auf seine Kontaktstellung zu dem Heizboden (12) durch ein elastisches Element (42) vorgespannt ist, welches elastische Element (42) aus wärmebeständigem Material wie bspw. Silikonschaum besteht, und dass in dem Aufsetzadapter (6) mit den Steckvorsprüngen (16,17) zusammenwirkende Abstreifelemente (33) vorgesehen sind.

2. Küchengefäß nach Anspruch 1, **dadurch gekennzeichnet, dass** die Steckvorsprünge (16,17) gegenüber dem Heizboden (12) an einem dazu beabstandeten Zweitboden (13) gehaltert sind und dass der zwischen dem Heizboden (12) und dem Zweitboden (13) geschaffene Hohlraum (21) mit einem Füllmedium (34) ausgefüllt ist.

3. Küchengefäß nach einem der Ansprüche 1 oder 2, **dadurch gekennzeichnet, dass** den Leiterelementen (19, 20) der Steckvorsprünge (16,17) jedenfalls innenseitig des Hohlraumes (21) ein zwischen diesen sich erstreckendes Kriechstrommaterial (35) zugeordnet ist.

4. Küchengefäß nach Anspruch 3, **dadurch gekennzeichnet, dass** das Kriechstrommaterial (35) ein Docht ist.

5. Küchengefäß nach Anspruch 3 oder 4, **dadurch gekennzeichnet, dass** das Kriechstrommaterial (35) ein hinsichtlich Kapillarwirkung strukturiertes Materialteil ist.

6. Küchengefäß nach einem der Ansprüche 3 bis 5, **dadurch gekennzeichnet, dass** das Kriechstrommaterial ein hygroskopisches Material ist.

7. Küchengefäß nach einem der Ansprüche 1 bis 6, **dadurch gekennzeichnet, dass** der Temperaturfühler (18) in einem Bereich einer kürzeren Verbindungsstrecke zwischen den beiden stromführenden Leiterelementen (19, 20) zugeordnet ist.

8. Küchengefäß nach einem der Ansprüche 1 bis 7, **dadurch gekennzeichnet, dass** innerhalb des Hohlraumes (21) ein auf einen Kontakt des elektrischen Leiterelementes (19, 20) einwirkendes Quellmaterial (36) angeordnet ist.

## Claims

1. Kitchen vessel (7) comprising a heating base (12) which is electrically heated, wherein the heating base (12) consists of a resistance heating element (10), the heating base (12) furthermore has a secondary base (13) on its underside in order to provide a cavity (21), a detachable adapter (6) is furthermore associated with the heating base (12) for the electrical contacting of the heating base (12) with conductor elements (19, 20) by means of plug projections (16, 17) arranged on the underside of the heating base (12), and the plug projections (16, 17) furthermore each have a geometrically active insulator foot (26, 27), **characterised in that** a plug projection (16, 17) has an insulator foot (26, 27) on the underside of the secondary base (13), that the height of the insulator foot (26, 27) measured axially corresponds to one third to half of the freely projecting length of the conductor element (19, 20), that the conductor element (19, 20) contacts the underside of the heating base (12) electrically by means of a spring contact (22, 23), that a temperature sensor (18) biased in the direction of its contact position relative to the heating base (12) by a resilient element (42) is furthermore provided, said resilient element (42) consisting of heat-resistant material, such as, e.g. silicone foam, and that restrictor elements (33) cooperating with the plug projections (16, 17) are provided in the detachable adapter (6).

2. Kitchen vessel according to claim 1, **characterised in that** the plug projections (16, 17) are held relative to the heating base (12) on a secondary base (13) arranged at a distance therefrom and that the cavity (21) provided between the heating base (12) and the secondary base (13) is filled with a filler (34).

3. Kitchen vessel according to either of claims 1 or 2, **characterised in that** a tracking material (35) is associated with the conductor elements (19, 20) of the plug projections (16, 17), inside the cavity (21) at least, and extends therebetween.

4. Kitchen vessel according to claim 3, **characterised in that** the tracking material (35) is a wick.

5. Kitchen vessel according to claim 3 or claim 4, **characterised in that** the tracking material (35) is a material part structured for a capillary effect.

6. Kitchen vessel according to one of claims 3 to 5, **characterised in that** the tracking material is a hygroscopic material.

7. Kitchen vessel according to one of claims 1 to 6, **characterised in that** the temperature sensor (18) is arranged in a region of a shorter connecting section between the two current-carrying conductor elements (19, 20).

8. Kitchen vessel according to one of claims 1 to 7, **characterised in that** an expanding material (36) acting on a contact of the electrical conductor element (19, 20) is arranged within the cavity (21).

## Revendications

1. Récipient de cuisine (7) présentant un fond chauffant (12) qui est chauffé électriquement et qui est composé d'un élément chauffant à résistance (10), le fond chauffant (12) présentant côté face inférieure, un deuxième fond (13) afin de créer un espace vide (21), un socle adaptateur (6) associé au fond chauffant (12) permettant de réaliser le contact électrique avec ce dernier (12) par l'intermédiaire de parties saillantes d'enfichage (16, 17) placées côté face inférieure du fond chauffant (12) et munies d'éléments conducteurs (19, 20), les parties saillantes d'enfichage (16, 17) étant chacune munies d'un pied d'isolateur (26, 27) de forme géométrique avantageuse, **caractérisé en ce qu'**une partie saillante d'enfichage (16, 17) présente côté face inférieure du fond chauffant (13) un pied d'isolateur (26, 27), qu'une hauteur du pied d'isolateur (26, 27) mesurée au niveau de son extension axiale correspond à un tiers jusqu'à la moitié de la longueur en saillie de l'élément conducteur (19, 20), que l'élément conducteur (19, 20) est en contact électrique avec le fond chauffant (12) côté face inférieure par l' intermédiaire d'un contact à ressort (22, 23), qu'un capteur de température (18) précontraint dans le sens de la position de son contact avec le fond chauffant (12) à l'aide d'un élément élastique (42) est prévu, l'élément élastique (42) étant composé d'un matériau résistant à la chaleur comme par exemple de la mousse de silicone, et **en ce que** des éléments de raclage (33) coopérant entre eux sont prévus dans le socle adaptateur (6) muni des parties saillantes d'enfichage (16, 17).

2. Récipient de cuisine selon la revendication 1, **caractérisé en ce que** les parties saillantes d'enfichage (16, 17) faisant face au fond chauffant (12) sont maintenues sur un deuxième fond (13) espacé à cet effet et **en ce que** l'espace vide (21) créé entre le fond chauffant (12) et le deuxième fond (13) est rempli à l'aide d'un fluide de remplissage (34).

3. Récipient de cuisine selon l'une des revendications 1 ou 2, **caractérisé en ce qu'**un matériau résistant au courant de cheminement (35) s'étendant entre les éléments conducteurs (19, 20) des parties saillantes d'enfichage (16, 17) est associé auxdits éléments conducteurs (19, 20), en tout état de cause côté face intérieure de l'espace vide (21).

4. Récipient de cuisine selon la revendication 3, **caractérisé en ce que** le matériau résistant au courant de cheminement (35) est une mèche.

5. Récipient de cuisine selon la revendication 3 ou 4, **caractérisé en ce que** le matériau résistant au courant de cheminement (35) est un élément de matériau structuré en termes d'action capillaire.

6. Récipient de cuisine selon l'une des revendications 3 à 5, **caractérisé en ce que** le matériau résistant au courant de cheminement est un matériau hygroscopique.

7. Récipient de cuisine selon l'une des revendications 1 à 6, **caractérisé en ce que** le capteur de température (18) est associé dans une zone de plus courte liaison de connexion entre les deux éléments conducteurs (19, 20).

8. Récipient de cuisine selon l'une des revendications 1 à 7, **caractérisé en ce qu'**un matériau brut (36) agissant sur un contact de l'élément conducteur électrique (19, 20) est placé à l'intérieur de l'espace vide (21).
